Europäisches Patentamt

European Patent Office

Office européen des brevets

(11) Veröffentlichungsnummer: **0 062 801**

**A1**

(12) # EUROPÄISCHE PATENTANMELDUNG

(21) Anmeldenummer: 82102478.3

(22) Anmeldetag: 25.03.82

(51) Int. Cl.³: **G 01 P 3/487**
G 01 P 5/07, G 01 F 1/075
G 01 D 5/12

(30) Priorität: 31.03.81 DE 3112709

(43) Veröffentlichungstag der Anmeldung:
20.10.82 Patentblatt 82/42

(84) Benannte Vertragsstaaten:
CH DE FR GB LI

(71) Anmelder: DODUCO KG. Dr. Eugen Dürrwächter
Im Altgefäll 12
D-7530 Pforzheim(DE)

(72) Erfinder: Kuers, Günter, Dr.
Schwarzwaldstrasse 22
D-7530 Pforzheim(DE)

(72) Erfinder: Vester, Klaus
Panoramastrasse 32
D-7534 Birkenfeld(DE)

(74) Vertreter: Twelmeier, Ulrich, Dipl.Phys. et al,
Patentanwälte Dr. Rudolf Bauer Dipl.-Ing.Helmut
Hubbuch, Dipl.Phys. Ulrich Twelmeier Westliche
Karl-Friedrich-Strasse 29-31
D-7530 Pforzheim(DE)

(54) Induktiver Drehgeber.

(57) Es wird ein induktiver Drehgeber (1) unter Verwendung eines Wiegand-Drahtes (11) beschrieben, der dank einer besonderen asymmetrischen Anordnung des Wiegand-Drahtes (11) nur bei einer der beiden möglichen Drehrichtungen Wiegand-Impulse liefert.

Fig.1

EP 0 062 801 A1

Croydon Printing Company Ltd

- 1 -

## Induktiver Drehgeber

Die Erfindung geht aus von einem Drehgeber mit den im Oberbegriff des Patentanspruchs 1 angegebenen Merkmalen.

Wiegand-Drähte sind gerade, in ihrer Zusammensetzung homogene, ferromagnetische Drähte (z.B. aus einer Legierung von Eisen und Nickel, vorzugsweise 48 % Eisen und 52 % Nickel, oder aus einer Legierung von Eisen und Kobalt, oder aus einer Legierung von Eisen mit Kobalt und Nickel, oder aus einer Legierung von Kobalt mit Eisen und Vanadium, vorzugsweise 52 % Kobalt, 38 % Eisen und 10 % Vanadium), die infolge einer besonderen mechanischen und thermischen Behandlung einen weichmagnetischen Kern und einen hartmagnetischen Mantel besitzen, d.h. der Mantel besitzt eine höhere Koerzitivkraft als der Kern. Wiegand-Drähte haben typisch eine Länge von 5 bis 50 mm, vorzugsweise von 20 bis 30 mm. Bringt man einen Wiegand-Draht, bei dem die Magnetisierungsrichtung des weichmagnetischen Kerns mit der Magnetisierungsrichtung des hartmagnetischen Mantels übereinstimmt, in ein äußeres Magnetfeld, dessen Richtung mit der Richtung der Drahtachse übereinstimmt, der Magnetisierungsrichtung des Wiegand-Drahtes aber entgegengesetzt ist, dann wird bei Überschreiten einer Feldstärke von ca. 16 A/cm die Magnetisierungsrichtung des weichen Kerns des Wiegand-Drahtes umgekehrt. Diese Umkehrung wird

- 2 -

auch als Rückstellung bezeichnet. Bei erneuter Richtungsumkehr des äußeren Magnetfeldes kehrt sich die Magnetisierungsrichtung des Kerns bei Überschreiten einer kritischen Feldstärke des äußeren Magnetfeldes erneut um, so daß der Kern und der Mantel wieder parallel magnetisiert sind. Diese Umkehrung der Magnetisierungsrichtung erfolgt sehr rasch und geht mit einer entsprechend starken Änderung des magnetischen Kraftflusses pro Zeiteinheit einher (Wiegand-Effekt). Diese Änderung des Kraftflusses kann in einer Induktionsspule einen kurzen und sehr hohen (je nach Windungszahl und Belastungswiderstand der Induktionsspule bis ca. 12 Volt) Spannungsimpuls induzieren (Wiegand-Impuls).

Auch beim Zurückstellen des Kerns wird ein Impuls in einer Induktionsspule erzeugt, allerdings mit wesentlich geringerer Amplitude und umgekehrtem Vorzeichen als im Falle des Umklappens von der antiparallelen in die parallele Magnetisierungsrichtung.

Wählt man als äußeres Magnetfeld ein Wechselfeld, welches in der Lage ist, zuerst den Kern und danach auch den Mantel umzumagnetisieren und jeweils bis in die magnetische Sättigung zu bringen, so treten Wiegand-Impulse infolge des Umklappens der Magnetisierungsrichtung des weichmagnetischen Kerns abwechselnd mit positiver und negativer Polarität auf und man spricht von symmetrischer Erregung des Wiegand-Drahtes. Dazu benötigt man Feldstärken von ca. -(80 bis 120 A/cm) bis -(80 bis 120 A/cm). Das Ummagnetisieren des

Mantels erfolgt ebenfalls sprunghaft und führt ebenfalls zu einem Impuls in der Induktionsspule, jedoch ist der Impuls wesentlich kleiner als der beim Umklappen des Kerns induzierte Impuls und wird zumeist nicht ausgewertet.

Wählt man jedoch als äußeres Magnetfeld ein solches, welches nur in der Lage ist, den weichen Kern, nicht aber den harten Mantel in seiner Magnetisierungsrichtung umzukehren, dann treten die hohen Wiegand-Impulse nur mit gleichbleibender Polarität auf und man spricht von asymmetrischer Erregung des Wiegand-Drahtes. Dazu benötigt man in der einen Richtung eine Feldstärke von wenigstens 16 A/cm (für die Rückstellung des Wiegand-Drahtes) und in der umgekehrten Richtung eine Feldstärke von ca. 80 bis 120 A/cm.

Charakteristisch für den Wiegand-Effekt ist, daß die durch ihn erzeugten Impulse in ihrer Breite weitgehend unabhängig sind von der Änderungsgeschwindigkeit des äußeren Magnetfeldes und ein hohes Signal-zu-Rausch-Verhältnis aufweisen.

Drehgeber mit den Merkmalen des Oberbegriffs des Anspruchs 1 sind z.B. aus der DE-OS 21 57 286, aus der DE-OS 28 51 365 und aus dem DE-GM 80 26 668 bekannt. Ihnen ist gemeinsam, daß sie in beiden Drehrichtungen Wiegand-Impulse abgeben. Dabei ist in der DE-OS 21 57 286 bereits ein Drehgeber mit einer solchen Magnetanordnung beschrieben, welche in den beiden Drehrichtungen Pulse unterschiedlicher Polarität erzeugt, sodaß anhand der Polarität der Wiegand-Impulse die Drehrichtung erkannt werden kann.

Demgegenüber liegt der Erfindung die Aufgabe zugrunde, einen Drehgeber zu schaffen, welcher nur bei Drehung in der einen Drehrichtung Wiegand-Impulse abgibt, bei dem bei Drehung in der entgegengesetzten Richtung aber keine Wiegand-Impulse erzeugt werden.

Die Erfindung löst diese Aufgabe durch einen Drehgeber mit den im Anspruch 1 angegebenen Merkmalen. Vorteilhafte Weiterbildungen des Erfindungsgedankens sind Gegenstand der Unteransprüche.

Der erfindungsgemäße Drehgeber löst nicht nur die gestellte Aufgabe, vielmehr hat sich überraschenderweise auch gezeigt, daß ein derart unsymmetrischer Aufbau des Drehgebers zu höheren und steileren Wiegand-impulsen führt als dies bei entsprechenden Drehgebern mit symmetrischem Aufbau der Fall ist. Beides, sowohl das Ausbleiben von Wiegand-Impulsen bei Drehrichtungsumkehr als auch die Erhöhung der Steilheit und Amplitude der Wiegand-Impulse durch die erfindungsgemäß gewählte Anordnung war nach dem derzeitigen Verständnis der Vorgänge beim Wiegand-Effekt nicht zu erwarten.

Zweckmäßigerweise ruht der oder die Wiegand-Drähte und rotieren die Magnetpole (Anspruch 2), weil dann

- 5 -

die Sensorwicklungen ebenfalls ruhen können. Eine möglichst enge Kopplung zwischen dem Wiegand-Draht und der zugehörigen Sensorwicklung ist nämlich wünschenswert, um in der Sensorwicklung möglichst hohe Wiegand-Impulse zu erhalten. Deshalb befindet sich die Sensorwicklung vorzugsweise auch unmittelbar auf dem Wiegand-Draht (Anspruch 3).

Überraschenderweise wirkt es sich auf die Höhe der Wiegand-Impulse besonders günstig aus, wenn die Feldlinien der Magnetfelder möglichst in rechtem Winkel auf den Mantel des Wiegand-Drahtes auftreffen. Die Erfindung verwendet daher vorzugsweise Magnete, deren Achsen und damit die Achsen der Magnetfelder parallel zur Drehachse verlaufen (Anspruch 4), wohingegen der Wiegand-Draht bzw. die Wiegand-Drähte in einer die Drehachse rechtwinklig schneidenden Ebene vor den Magnetpolen liegen (Anspruch 7). Zweckmäßigerweise liegen dazu die Polflächen in einer gemeinsamen Ebene (Anspruch 8) und weisen untereinander gleiche Polstärken auf (Anspruch 9).

Als Magnete empfehlen sich vor allem Stabmagnete, insbesondere Ferrite oder Kobalt-Samariummagnete. Grundsätzlich ist aber auch die Verwendung anderer Magnete, z.B. in Hufeisenform, sogar die von Elektromagneten möglich, wobei letzteres jedoch zu Problemen bei der Stromversorgung führt.

Da der Wiegand-Draht im Verlauf einer Umdrehung wenigstens eine vollständige Hystereseschleife durchlaufen können muß, benötigt man zu seiner Beeinflussung wenigstens zwei Magnetpole unterschiedlicher Polarität, welche dann zweckmäßigerweise in 180°-Stellung angeordnet werden. Durch Verwendung mehrerer Magnetpolpaare kann man in demselben Wiegand-Draht bei einer Umdrehung eine entsprechende Anzahl von Wiegand-Impulsen erhalten und dadurch die Winkelauflösung des Drehgebers erhöhen. Die Anzahl der Magnete ist begrenzt durch ihre Abmessungen und durch die bei enger werdender Anordnung zunehmende gegenseitige magnetische Beeinflussung. Eine weitere Steigerung der Winkelauflösung des Drehgebers kann man dadurch erreichen, daß man eine Vielzahl von Wiegand-Drähten in unterschiedlichen Winkellagen in bezug auf die Drehachse anordnet; es erfolgt dann - je nach der Anzahl der Magnetpolpaare - bei einer Umdrehung in jedem Wiegand-Draht eine oder mehrere Ummagnetisierungen, welchen in Sensorwicklungen als Wiegandimpulse erfaßt werden können.

Möglich ist auch eine Anordnung aus ruhenden Magnetpolen und den Magnetpolen zugeordneten Sensorwicklungen, während ein oder mehrere Wiegand-Drähte erfindungsgemäß auf einem Rotor angeordnet sind und jedesmal, wenn sie an einer Sensorwicklung und dem zugeordneten Magnetpolpaar vorbeibewegt werden, darin einen Wiegand-Impuls induzieren, sofern der Rotor den "richtigen" Drehsinn aufweist.

- 7 -

Die Polstärke und/oder der kleinste Abstand der Wieganddrähte von den Magnetpolen ist natürlich so zu wählen, daß bei "richtigem" Drehsinn die Wiegand-Drähte wenigstens asymmetrisch, vorzugsweise jedoch symmetrisch erregt werden.

Ein Ausführungsbeispiel der Erfindung ist in den beigefügten Zeichnungen schematisch dargestellt und wird nachfolgend beschrieben.

Figur 1    zeigt einen Flügelradzähler in der Draufsicht bei geöffnetem Gehäuse und

Figur 2    zeigt den Schnitt II-II nach Fig. 1.

Das Gehäuse 1 des dargestellten Flügelradzählers für Flüssigkeiten ist in zwei Kammern 2 und 3 unterteilt. Zwei Anschlußstutzen 4 und 5 münden diametral in die im Gehäuseunterteil gelegene Kammer 2, in welcher frei drehbar ein Flügelrad 6 mit quer zur Strömungsrichtung verlaufender Drehachse 7 gelagert ist.

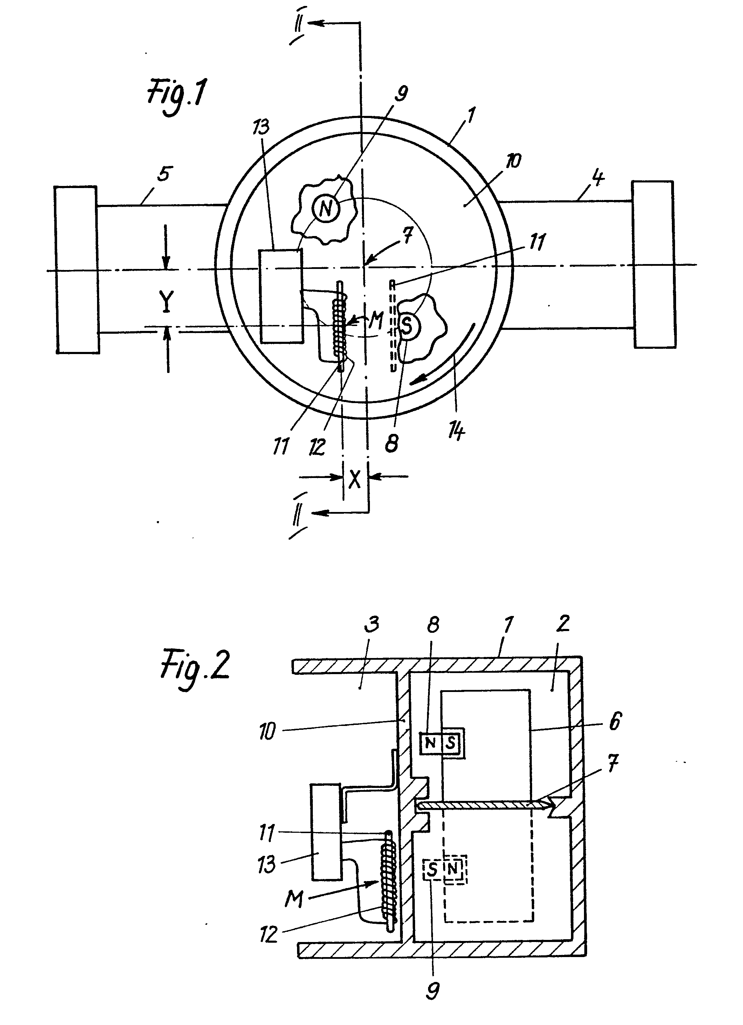

Am Flügelrad 6 sind einander diametral gegenüberliegend zwei Stabmagnete 8 und 9, deren Achsen parallel zur Drehachse 7 verlaufen, in gleichem Abstand von der Drehachse 7 angeordnet; die Magnete können z.B. aus Hartferrit oder Kobalt-Samarium bestehen; sie sind antiparallel und mit ihren einen Enden dicht vor einer Messingtrennwand 10 angeordnet, welche die beiden Kammern 2 und 3 trennt und durch welche das Magnetfeld hindurchgreifen kann. In Fig. 1 ist die Trenn-

- 8 -

wand 10 teilweise weggebrochen, um die dahinter liegenden Magnete 8 und 9 sichtbar zu machen.

Die zweite Kammer 3 ist trocken. In ihr befindet sich dicht vor der Trennwand 10 ein ca. 17 mm langer, gerader Wiegand-Draht 11, welcher eine Sensorwicklung 12 mit ca. 1500 Windungen trägt. Der Wiegand-Draht ist in einer Ebene senkrecht zur Drehachse 7 (und damit zugleich parallel zur Trennwand 10) angeordnet, und zwar derart, daß sein Mittelpunkt M in Richtung der Längsachse des Wieganddrahtes 11 einen Abstand Y und in Richtung senkrecht zur Längsachse des Wieganddrahtes 11 in der Ebene senkrecht zur Drehachse 7 einen Abstand X von der Drehachse 7 bzw. von der die Drehachse 7 verlängernden Geraden aufweist. Bei Magneten 8 und 9, die etwa einen Abstand von 20 mm aufweisen und so stark sind, daß sie den Wieganddraht 11 symmetrisch erregen können, beträgt X vorzugsweise 10 mm bis 30 mm, während Y vorzugsweise 10 mm bis 20 mm beträgt.

Bei der dargestellten Anordnung und symmetrischer Erregung des Wiegand-Drahtes 11 erhält man bei Drehung des Flügelrads 6 in Richtung des Pfeils 14 beim Vorbeigang der Magnete 8 und 9 jeweils einen Wiegand-Impuls in der Sensorwicklung 12, der mehr als 1 V hoch sein kann, und zwar erzeugen die beiden entgegengesetzt polarisierten Magnete 8 und 9 Impulse mit entgegengesetztem Vorzeichen. Kehrt man jedoch die durch den Pfeil 14 gekennzeichnete Drehrichtung
um, dann bleiben sowohl die positiven als auch die
negativen Wieqand-Impulse aus. Wählt man den seitlichen Versatz X von der Drehachse 7 in umgekehrter
Richtung, was in Fig. 1 gestrichelt angedeutet ist,
dann kehren sich die Verhältnisse gerade um und es
treten keine Wiegand-Impulse auf, wenn sich das
Flügelrad 6 in Richtung des Pfeils 14 dreht.

- 10 -

Patentansprüche:

1.    Induktiver Drehgeber aus einer Anordnung von Magnetpolen und aus wenigstens einem magnetisch mit einer Wicklung (der "Sensorwicklung") gekoppelten Wiegand-Draht, wobei die Magnetpole und der wenigstens eine Wiegand-Draht derart relativ zueinander um eine Achse drehbar angeordnet sind, daß im Verlauf einer Umdrehung der magnetische Kraftfluß im Wiegand-Draht wenigstens einmal seine Richtung umkehrt, dadurch gekennzeichnet, daß der wenigstens eine Wiegand-Draht (11) in einer die Drehachse (7) schneidenden Ebene liegt,
daß der wenigstens eine Wiegand-Draht (11) einen Abstand von der Drehachse (7) aufweist,
und daß das von der Drehachse (7) auf den Wiegand-Draht (11) gefällte Lot den Wiegand-Draht (11) außerhalb seiner Mitte trifft.

2.    Drehgeber nach Anspruch 1, dadurch gekennzeichnet, daß der Wiegand-Draht (11) ruht und die Anordnung aus Magnetpolen (8,9) drehbar ist.

3.    Drehgeber nach Anspruch 1 oder 2, dadurch gekennzeichnet, daß die Sensorwicklung (12) den Wiegand-Draht (11) umgibt.

4.    Drehgeber nach Anspruch 1, 2 oder 3, dadurch gekennzeichnet, daß die Achsen der Magnetpole (8,9) parallel zur Drehachse (7) verlaufen.

5. Drehgeber nach einem der vorstehenden Ansprüche, dadurch gekennzeichnet, daß die Magnetpole die Pole von stabförmigen Magneten (8,9) sind, wobei benachbarte Magnete (8,9) stets antiparallel orietiert sind.

6. Drehgeber nach Anspruch 4 oder 5, dadurch gekennzeichnet, daß die Magnetpole (8,9) symmetrisch zur Drehachse (7) angeordnet sind.

7. Drehgeber nach einem der vorstehenden Ansprüche, dadurch gekennzeichnet, daß der Wiegand-Draht (11) in einer die Drehachse (7) rechtwinklig schneidenden Ebene angeordnet ist.

8. Drehgeber nach Anspruch 6 und 7, dadurch gekennzeichnet, daß die Polflächen der den Wiegand-Draht (11) beeinflussenden Magnetpole (8,9) in einer gemeinsamen, die Drehachse (7) rechtwinklig schneidenden Ebene liegen.

9. Drehgeber nach Anspruch 8, dadurch gekennzeichnet, daß die Polstärken der Magnetpole (8,9) untereinander gleich gewählt sind.

Fig.1

Fig.2

**0062801**

Nummer der Anmeldung

## EUROPÄISCHER RECHERCHENBERICHT

Europäisches Patentamt

EP 82 10 2478

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | DE-A-2 817 169 (BOSCH) <br><br> * Seite 5; Figur 1 * <br><br> --- | 1-3,5, 6 | G 01 P 3/48 <br> G 01 P 5/07 <br> G 01 F 1/075 <br> G 01 D 5/12 |
| Y | DE-B-1 281 549 (SIEMENS) <br><br> * Spalte 3, Zeilen 7-41; Figur 1 * <br><br> --- | 1,2,4-8 | |
| Y | DE-A-2 931 329 (TELDIX) <br> * Seite 13, Zeilen 7-31; Figur 3 * <br><br> --- | 1-5,8 | |
| A | DE-A-2 853 813 (SIEMENS) <br> * Seite 10, Zeilen 6-19; Figur 3 * <br><br> --- | 1-6,8 | |
| D,A | DE-A-2 157 286 (WIEGAND) <br> * Seite 3, Zeilen 6-19; Seite 6, Zeilen 5-11; Figuren 1,4 * <br><br> --- | 1,4 | **RECHERCHIERTE SACHGEBIETE (Int. Cl. 3)** |
| D,A | DE-A-2 851 365 (BOSCH) <br><br> * Seite 17; Figuren 1,4 * <br><br> ----- | 1,3,6, 7 | G 01 P <br> G 01 F <br> G 01 D |

Der vorliegende Recherchenbericht wurde für alle Patentansprüche erstellt.

| Recherchenort <br> DEN HAAG | Abschlußdatum der Recherche <br> 08-07-1982 | Prüfer <br> HANSEN P. |
|---|---|---|